# EUROPEAN PATENT APPLICATION

(11) **EP 2 955 939 A1**
(43) Date of publication of application: **16.12.2015**
(21) Application number: 15170624.9
(22) Date of filing: 04.06.2015
(51) Int. Cl.: H04R 25/00, H04N 21/422

(54) **REMOTE CONTROL FOR A LISTENING DEVICE AND A METHOD THEREOF**

(30) Priority: 10.06.2014 EP 14171791
(71) Applicant: Oticon A/S, 2765 Smørum (DK)
(72) Inventor: Pedersen, Michael Syskind, DK-2765 Smørum (DK)
(74) Representative: Nielsen, Hans Jørgen Vind

(57) **Abstract**

According to an embodiment, a method for automatically customizing a software application at a remote control adapted to control a hearing instrument is disclosed. The method includes receiving, at the remote control, a sound sequence and interpreting a metadata comprised in the sound sequence. The sound sequence is delivered by a speaker of the hearing instrument. thereafter, the software application available at the remote control is customized in accordance with the interpreted metadata such that the software application is adapted to the hearing instrument.

## Description

### Field

The present disclosure relates to a remote control adapted to control a listening device and a method thereof. In particular, the disclosure relates to automatically customizing configuration of a software application residing at the remote control, the software application being adapted to control the hearing instrument when run on the remote control.

### Description of the Related Art

Modem programmable hearing instruments such as hearing aids are adapted for being programmed by a fitter typically using a computer equipped with a dedicated interface. The computer may be wired or wireless, and the hearing aids may be programmed using dedicated software running on the personal computer.

While using the hearing instrument, wireless remote controls for user control of hearing aids are also known. They are usually dedicated, hand-held devices for controlling simple functions, e.g. regulating the output volume from the hearing aids or changing among different programs stored in the hearing aids. Such remote controls usually use a software application, installed at the remote control, with functionalities that are accessible through a user interface, which is generally standard/ common for a wide array of hearing instruments such as hearing aids. Hearing instrument such as hearing aids vary in many respects, such as hearing aid type, gain parameters, compression, etc. and the users of the hearing instrument may also have different level of familiarity with the software application. Most of such software application, however, present a single user interface that fails to take into account specific characteristics of the hearing instrument in use and/ or user comfort in using plethora of control functionalities of the software application.

Auto-customizing the software application becomes particularly challenging in scenarios where the hearing instrument cannot transmit messages to an external device such as the remote control, but can only receive messages from the external device.

In order to make the functionalities more specific to the type of hearing aid and/ or user's usability comfort level, the user may typically be required to manually configure the software application such as user interface of the software application. This is particularly difficult because the user is usually not aware of technical details of the hearing aid that he is using. Therefore, the user is expected to browse through multiple options in order to use the functionalities that are relevant for the hearing aid being worn by the user. The result is that the user is presented with the user interface which may be confusing, inefficient, or otherwise inappropriate for the user. Furthermore, because of these reasons, the user may become reluctant to use such software applications.

The problem is made worse when the software application at the remote control is updated with additional functionalities, some of which may be relevant to the hearing aid type that the user uses. The user typically will have to go through the process of identifying the new functionality and identifying if any of the new functionality is relevant for his hearing aid. The user is thus able to utilize the advantages of the updated software application but only after following the cumbersome and inefficient process of trial and error.

Sometimes the user might have to browse through the entire updated software application because the update may have rearranged user interface access points, such as icons, menu, action bars, to functionalities. At any given time, the array of choices presented to the user may be so large as to be confusing, to take up an undue amount of the screen space, or to take up so much memory with the code underlying the choices that system performance is compromised. With increasing familiarity with the application program or as the needs change, the user may outgrow the default user interface made available, thus requiring access to a broader or different set of functionalities.

Therefore, there is a need to not only automatically customize the user interface and functionalities of the software application but also take into account user's comfort level with the use of the software application.

### Summary

According to an embodiment, a method for automatically customizing a software application adapted to control a hearing instrument is disclosed. The method includes receiving, at a remote control, a sound sequence and interpreting a metadata comprised in the sound sequence, the sound sequence being delivered by a speaker of a hearing instrument; and customizing the software application available at the remote control in accordance with the interpreted metadata such that the software application is adapted to the hearing instrument.

According to another embodiment, a system for automatically customizing a software application adapted to control a hearing instrument is disclosed. The system includes a speaker at the hearing instrument adapted to deliver a sound sequence comprising a metadata; a microphone at the remote control adapted to receive the sound sequence comprising a metadata; a decoder at the remote control adapted to interpret the received metadata; and a configurator adapted to customize the software application available at the remote control in accordance with the interpreted metadata such that the software application is adapted to the hearing instrument.

According to yet another embodiment, a hearing instrument is disclosed. The hearing instrument includes a hearing instrument microphone adapted to capture a sound, a processor adapted to process a microphone signal based on the captured sound and a speaker adapted to output the processed microphone signal. The processor is configured to instruct the speaker to deliver a sound sequence comprising a metadata, the metadata being configured to be interpreted at a remote control and the interpreted metadata being configured to customize a software application, adapted to control the hearing instrument, available at the remote control such that the software application is adapted to the hearing instrument.

According to yet another embodiment, a machine readable medium comprising executable instructions is disclosed. The instructions, which when executed by a remote control, causes the remote control to interpret a received metadata, the metadata being comprised in a sound sequence being received at a microphone of the remote control and the sound sequence being delivered by a speaker at a hearing instrument; and to customize a software application available at the remote control in accordance with the interpreted metadata such that the software application is adapted to the hearing instrument. The software application is adapted to control the hearing instrument.

### Brief description of accompanying figures

The embodiments of the disclosure, together with its advantages, may be best understood from the following detailed description taken in conjunction with the accompanying figures in which:
Fig. 1 illustrates a method for automatically customizing a software application in a remote control adapted to a hearing instrument according to an embodiment of the disclosure;
Fig. 2 illustrates a method for automatically customizing the software application in the remote control adapted to the hearing instrument according to an embodiment of the disclosure;
Fig. 3 illustrates a method for automatically customizing the software application in the remote control adapted to the hearing instrument according to different embodiments of the disclosure;
Fig. 4 illustrates an exemplary hearing instrument according to an embodiment of the disclosure;
Fig. 5 illustrates the remote control according to an embodiment of the disclosure; and
Fig. 6 illustrates a method for customizing the software application (such as a mobile application) at the remote control (such as a smartphone) according to an embodiment of the disclosure.

### Detailed Description

A hearing instrument refers to an apparatus such as e.g. a hearing device, a hearing aid, headset or other hearing instrument. Some of these devices are typically used to augment and/ or improve hearing capabilities of a user by receiving acoustic signals from the user's surroundings or receiving audio signal electronically, generating corresponding audio signals, possibly modifying the audio signals and providing the possibly modified audio signals as audible signals to at least one of the user's ears. The hearing instrument may comprise a single unit or several units communicating electronically with each other such as in a binaural hearing aid system. The hearing instrument may include a hearing aid device, which is worn by the user during use.

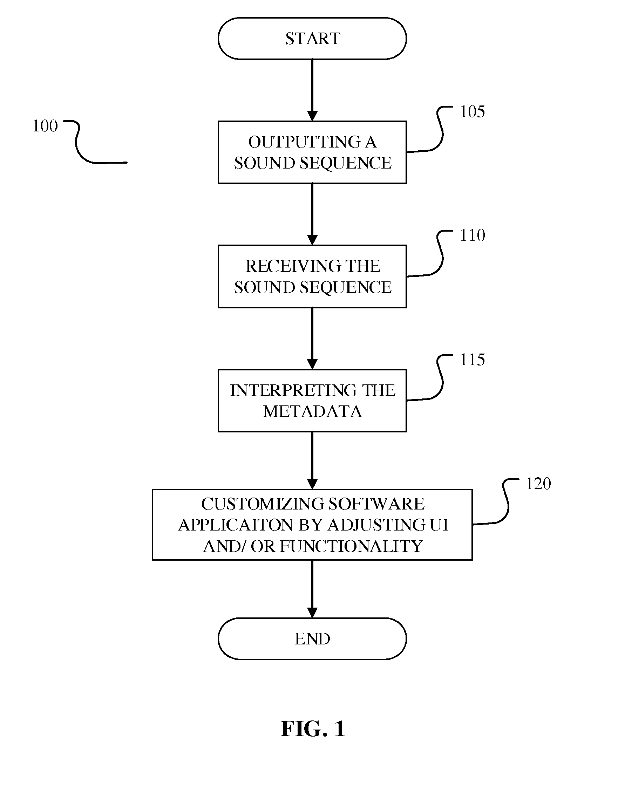

Referring to Fig. 1, a method 100 for automatically customizing a software application adapted to control a hearing instrument is disclosed. The method includes at 105, delivering a sound sequence comprising a metadata using a speaker of the hearing instrument. At 110, the sound sequence is received at a remote control and at 115, the metadata comprised in the sound sequence is interpreted at the remote control and the interpreted metadata is used to customize, at 120, the software application available at the remote control in accordance with the interpreted metadata such that the software application is adapted to the hearing instrument. When the hearing instrument delivers the sound sequence, the hearing instrument is not in use.

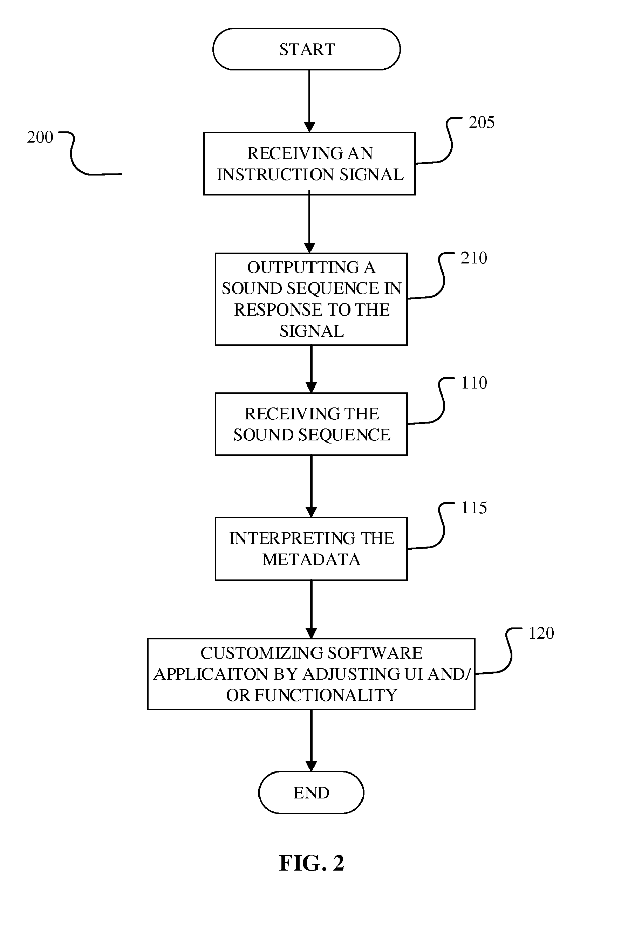

Additional steps may also be included, as illustrated in Fig. 2; where prior to the delivering the sound sequence; at 205, the remote control transmits an instruction signal, which is received at the hearing instrument. The hearing instrument in response to the received instruction signal, at 210 delivers the sound sequence comprising the metadata. The following steps are same as the steps illustrated in Fig. 1, i.e. at 110 the sound sequence comprising the metadata is received at the remote control. Thereafter, at 115, the received metadata is interpreted at the remote control and the interpreted metadata is used to customize, at 120, the software application available at the remote control in accordance with the interpreted metadata such that the software application is adapted to the hearing instrument. When the hearing instrument delivers the sound sequence, the hearing instrument is not in use.

The sound sequence that the hearing instrument delivers is typically stored in a memory of the hearing instrument. It is evident that the invention may be practised using any sound sequence that may be captured by the remote control so long as the metadata associated with the sound sequence provides information that allows customization of the software application at the remote control.

The method, according to different embodiments of the disclosure, allows for using the metadata to create customized user interface (UI) and/ or functionalities of the software application residing at the remote control. The metadata is created according to a metadata schema and the software application includes a decoder having a mapping engine that is capable of interpreting schema of the metadata. The interpretation allows software application using a configurator to define mechanisms for binding application data to the controls of the UI in order to implement and render a customized user interface associated with the bound application data that represents the customized functionalities. For example, the schemes includes rules for defining basic as well as custom UI controls, properties of the controls, layout of the controls, limits (range) of settings and the like. The metadata includes information relating to the features and settings of the hearing instrument. This information may include hearing instrument type, hearing instrument model, left and/ or right ear fit hearing instrument, unilateral or bilateral fitting, hearing instrument features, hearing instrument settings including range for each setting, hearing instrument user profile, active programs in the hearing instrument, and a combination thereof. It is to be noted that other information that is relevant for the hearing instrument and useful in controlling the performance and useability of the hearing instrument may also be included.

In an embodiment, the metadata may further include an identifier tag for the hearing instrument and the software application may be adapted to store identifier tags for a plurality of hearing instruments, the plurality of hearing instruments comprising same or similar or different features. Once the identifier tag and the customization is stored in the remote control, the user may simply choose the identifier tag on the remote control and the stored customized software application associated with the hearing instrument having the chosen identifier tag is presented to the user. This allows for using the same remote control for a number of hearing instruments without having to customize the software application each time a different hearing instrument is being used with the remote control. The decoder, comprising the mapping engine, of the software application is adapted to interpret the metadata and the configurator renders the customized UI controls with dynamically associated customized functionalities.

The customizing of the software application includes adjusting a user interface (UI) and/ or functionalities of the software application in accordance with the interpreted metadata such that the user interface and/ or the functionalities of the software application are adapted to features and/ or setting of the hearing instrument. The adaptation of the software application to features and/ or setting of the hearing instrument includes rendering a customized UI with associated application data that only include functionalities relevant for the hearing instrument and/ or setting of the hearing instrument. For example, if the hearing instrument does not have a particular feature controllable by functionality of the software application, then such functionality along with associated UI element (such as an icon) will not be part of the customized UI. Similarly, if setting of a particular feature in the listening aid is limited to a predetermined threshold value during a fitting session, then the functionality controlling the feature will automatically be limited to the predetermined threshold value through the auto-customization method of the disclosure. The customizable functionalities may include gain control, directionality control, feedback control, scenario based selections, echo cancelling, equalizer for increasing or decreasing frequency specific response, lifestyle based selections, proper fit notifications, middle ear status notification, etc. and a combination thereof. The skilled person would realize that other functionalities may also form part of this non-exhaustive list. Similarly, the customizable UI elements may include one or more of controls like icons, dropdown list and/ or properties of the controls and/ or layout of the controls, and the like. Many other elements that are not included in this non-exhaustive list may also be included.

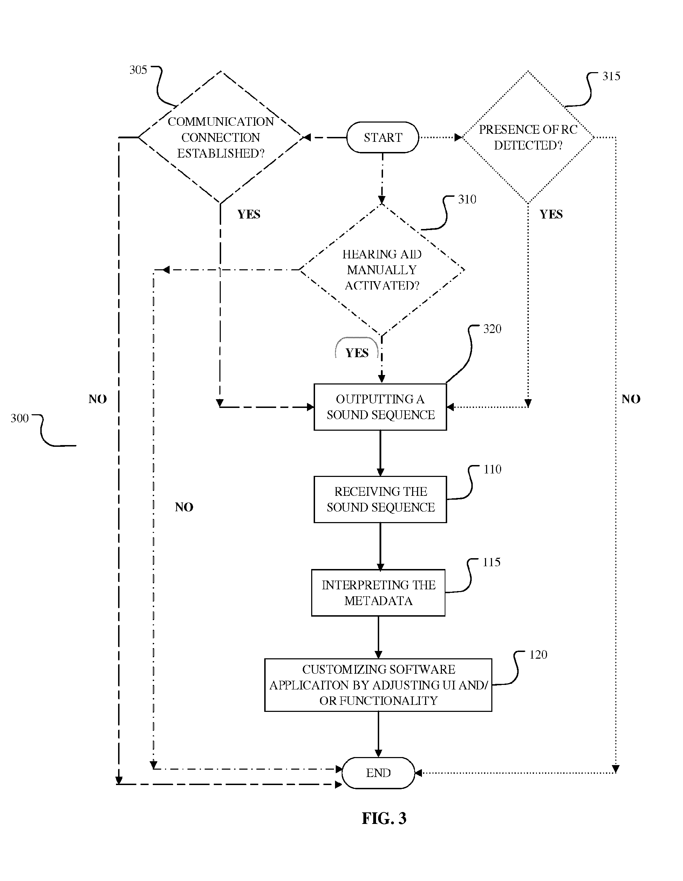

Referring now to Fig. 3, which illustrates three different methods for customizing the software application available at the hearing instrument according to various embodiments of the disclosure. The embodiments include delivering the sound sequence at the occurrence of a predefined event.

In an embodiment, when the hearing instrument is not in use, then at 305, a determination at the hearing instrument is made whether a communication connection between the remote control and the hearing instrument is established. This is possible, for example, with the bluetooth hearing instruments having auto-pairing capabilities with the remote control. If such a connection is established, then at 320, the hearing instrument delivers the sound sequence comprising the metadata. Thereafter, the sound sequence comprising the metadata is received at the remote control at 110, the remote control interprets the received metadata is interpreted at 115, and the interpreted metadata is used to customize, at 120, the software application at the remote control such that the software application is adapted to the hearing instrument.

In another embodiment, when the hearing instrument is not in use, then at 310, a determination at the hearing instrument is made, whether the hearing instrument is manually activated to deliver the sound sequence comprising the metadata. The manual activation may include either pressing a button/ using an interface available at the hearing instrument or transmitting an activation signal through a communication link using an interface available at a device other than the hearing instrument such as the remote control that may include smartphone, laptop, or the like. The manual activation forces the hearing instrument to deliver the sound sequence. If such manual activation is made, then at 320, the hearing instrument delivers the sound sequence comprising the metadata. Thereafter, the sound sequence comprising the metadata is received at the remote control at 110, the remote control interprets the received metadata is interpreted at 115, and the interpreted metadata is used to customize, at 120, the software application at the remote control such that the software application is adapted to the hearing instrument.

In yet another embodiment, when the hearing instrument is not in use, then at 315, the hearing instrument that may include a proximity sensor adapted to sense presence of the remote control in close proximity. At 315, a determination at the hearing instrument is made, when the hearing instrument is not in use, whether the remote control is in close proximity to the hearing instrument. If the determination concludes that the remote control is in close proximity to the hearing instrument, then at 320, the hearing instrument delivers the sound sequence comprising the metadata. Thereafter, the sound sequence comprising the metadata is received at the remote control at 110, the remote control interprets the received metadata is interpreted at 115, and the interpreted metadata is used to customize, at 120, the software application at the remote control such that the software application is adapted to the hearing instrument. Additionally or alternatively, one can envisage providing a proximity sensor in the remote control device whereby the proximity sensor is adapted to sense presence of the hearing instrument. Based on the detection of the hearing instrument in close proximity, an instruction signal may be transmitted to the hearing instrument for producing the sound sequence comprising the metadata.

Occasionally, the received metadata may not be interpreted properly, thus failing to produce the customized UI. This may happen such as because of incorrect detection of establishment of connection (as required in 305) or incorrect proximity detection of the remote control and the hearing instrument (as required in 315) or other reasons. In these cases, the user may be prompted to manually activate the hearing instrument (as required in 310) to instruct the hearing instrument to deliver the sound sequence. The activation may be performed by using an interface on the hearing instrument it self or through a communication device, interacting with the hearing instrument. The manual activation may be repeated until the customized UI is rendered in the remote control, even for the embodiment requiring manual activation (as required in 310).

The duration for delivering the sound sequence is typically no longer than 5 seconds. However, in different embodiments, the duration may be made longer or shorter such as less than 10 seconds, such as less than 8 seconds, such as less than 6 seconds, such as less than 4 seconds, such as less than 2 seconds, such as less than 1 second. The hearing instrument may include a visual indicator such an LED that is adapted to light up when the sound sequence comprising the metadata is playing. The visual indication is performed by a dedicated LED or a general-purpose hearing instrument LED that is otherwise used for other purposes like indicating proper fit of the hearing instrument in the ear, etc.. However, in the latter implementation, the general-purpose LED is adapted to receive a signal to produce a distinct colored light when the sound sequence is being played. In another embodiment, the hearing instrument may be adapted to play the sound sequence only when the background noise level does not exceed a predetermined sound pressure level. This allows the microphone of the remote control to better capture the sound sequence for metadata interpretation purposes.

In any of the above-mentioned embodiments, the hearing instrument not being in use refers to a situation when the hearing instrument is not being used by the user. For example, for a hearing aid as the hearing instrument, the hearing aid is not worn by the user when the hearing aid device is not in use. i.e. is in a customization mode (described later).

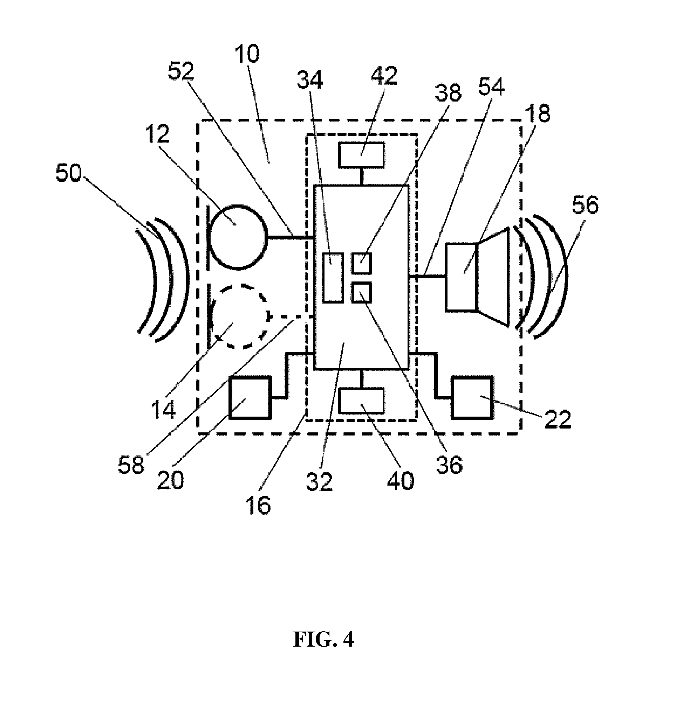

Fig. 4 illustrates an exemplary hearing instrument according to an embodiment of the disclosure. The hearing instrument, as represented by a hearing aid device 10 includes a microphone 12, a telecoil 14, an electric circuitry 16, a speaker 18, an interface 20 and a battery 22. In another embodiment, the telecoil 14 can also be a second microphone, or a Bluetooth-Receiver, Infrared-Receiver, or any other wireless sound signal input configured to receive electrical sound signals wirelessly (not shown).

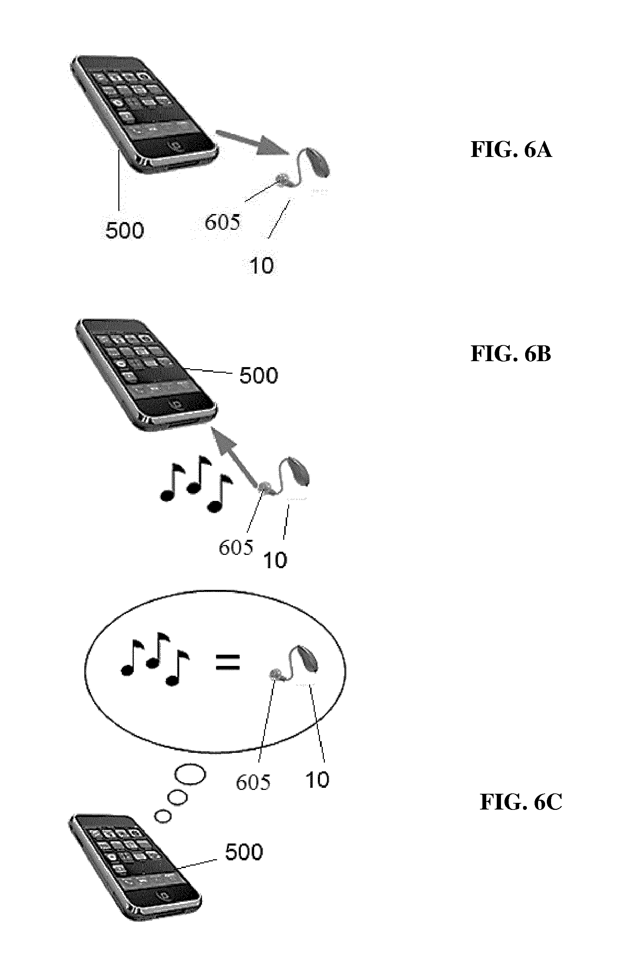

The electric circuitry 16 comprises a control unit 32, a processing unit 34, a sound generation unit 36, a memory 38, a receiver unit 40, and may also include a proximity sensor 42. In the present embodiment, the processing unit 34, the sound generation unit 36 and the memory 38 are part of the control unit 24. The hearing aid 10 is configured to be worn at an ear of a user or with the speaker part in the canal of the user of the entire unit inside the canal of the user. One hearing aid can for example be arranged at a left ear and one hearing aid can be arranged at a right ear of a user with an insertion part 605 (see Fig. 6) of the hearing aid 10 being arranged in an ear canal of the user.

The hearing aid 10 can be operated in various modes of operation, which are executed by the control unit 32 and use various components of the hearing aid 10. The control unit 32 is therefore configured to execute algorithms, to apply outputs on electrical signals processed by the control unit 32, and to perform calculations, e.g., for filtering, for amplification, for signal processing, or for other functions performed by the control unit 32 or its components. The calculations performed by the control unit 32 are performed on the processing unit 34. Executing the modes of operation includes the interaction of various components of the hearing aid 10, which are controlled by algorithms executed on the control unit 32. For example, in a hearing aid mode, the hearing aid 10 is used as a hearing aid for hearing improvement by sound amplification and filtering. In customization mode, the hearing aid 10 is used to deliver a sound sequence comprising the metadata using the sound generation unit 36 and the speaker 18 in order to customize the software application.

The mode of operation of the hearing aid 10 can be manually selected by the user via the interface 20 or automatically selected by the control unit 32, e.g., by receiving transmissions from an external device such as the remote control. The remote control may include devices such as a smartphone, laptop, a smartwatch or the like.

The hearing aid 10 operating in the hearing aid mode (when the device is in use) receives environment sound 50 with the microphone 12 and wireless sound signals with the telecoil 14. The microphone 12 generates electrical environment sound signals 52 and the telecoil 14 generates electrical wireless sound signals 58, which are provided to the control unit 32. If both electrical sound signals 52 and 58 are present in the control unit 32 at the same time, the control unit 32 can decide to process one or both of the electrical sound signals 52 and 58, e.g., as a linear combination. The processing unit 34 of the control unit 32 processes the electrical sound signals 52 and 58, e.g. by spectral filtering, frequency dependent amplifying, filtering, or other typical processing of electrical sound signals in a hearing aid generating an output sound 56. The processing of the electrical sound signals 52 and 58 by the processing unit 26 depends on various parameters, e.g., sound environment, sound source location, signal-to-noise ratio of incoming sound, mode of operation, type of output transducer, battery level, and/or other user specific parameters and/or environment specific parameters. The output sound signal 52 is provided to the speaker 18, which generates an output sound 56 corresponding to the output sound signal 54 which stimulates the hearing of the user.

The customization mode of the hearing aid 10 is used to generate an output sound sequence, when the device is not in use. In various embodiments, the customization mode is initiated at different stages. For example, the customization mode is initiated automatically when the hearing aid device 10 is turned on. Additionally or alternatively, the customization mode may be initiated manually when the hearing aid device 10 receives manual instruction through the interface 20. Additionally or alternatively, the customization mode may be initiated automatically by the control unit 32, e.g., when the control unit 32 receives the instruction signal from an external device / remote control such as a smartphone, laptop or the like. Additionally or alternatively, the customization mode may be initiated automatically by the control unit 32, e.g., when the control unit 32 receives the instruction signal from the proximity sensor 42 that is adapted to sense presence of the remote control in close proximity. In the customization mode, the sound generation unit 36 or the processing unit 36 accesses the sound sequence media file comprising the metadata, from the memory 38, and delivers the sound sequence using the speaker 18. For only illustrative purposes, in the customization mode, 54 may be considered as sound sequence signal corresponding to the accessed sound sequence and 56 as the output sound sequence. During the customization mode, the hearing aid device is not in use.

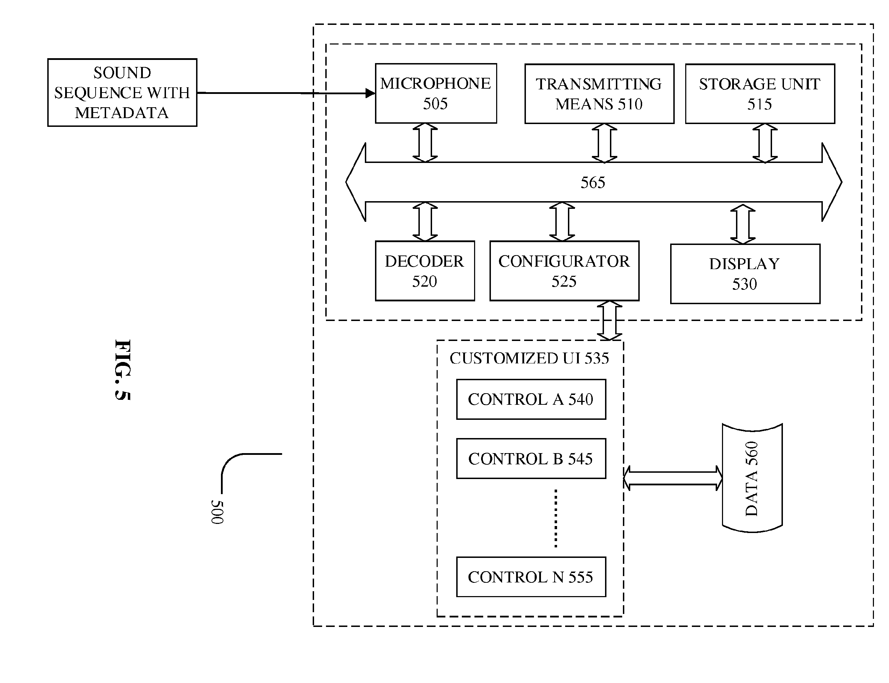

Fig. 5 illustrates the remote control according to an embodiment of the disclosure. The remote control includes a microphone 505 adapted to the sound sequence comprising metadata, a decoder 520 adapted to interpret the received metadata and a configurator 525 adapted to customize the software application available at the remote control in accordance with the interpreted metadata such that the software application is adapted to the hearing instrument.

The decoder 520 includes a mapping engine that is capable of interpreting schema of the metadata. The configurator 525 is adapted to use the interpreted metadata to define mechanisms for binding application data 560 to the controls of the UI in order to implement and render a customized user interface 535 associated with the bound application data that represents the customized functionalities. For example, the schemes includes rules for defining basic as well as custom UI controls (540, 545, .... 555), properties of the controls, layout of the controls, limits (range) of settings associated with the controls and the like. Although, the decoder and the configurator are illustrated as separate blocks but the functions of these units may be integrated into a single unit. The customized UI with custom UI controls are displayed on the display 530 of the remote control.

Additionally or alternatively, the features and/ or settings, as obtained by interpreting the metadata at the remote control, may be stored in a storage unit 515 of the remote control. If the features of the hearing instrument are updated with new features, for example following a fine-tuning during a fitting follow up session, then during subsequent automatic customization, the storage unit is updated with the updated hearing instrument features and/ or setting by storing the updated features of the hearing instrument. Additionally or alternatively, if the functions of the software application is updated with additional functions, then the updated software application is configured to be automatically customized in relation to the hearing instrument. This is performed by using a mapping table that allows mapping of the updated software application with the stored features/ stored updated features/ stored settings/ stored updated settings of the hearing instrument.

The customized user interface and/ or functionalities of the software application are presented to a user in a plurality of access modes. The access mode includes presentation of user interface layout to the user. This allows for the user to be gradually familiarized with the user interface and/ or functionalities and/ or settings available for the hearing instrument in use. The access modes are different in number of functionalities provided to the user, and level of control provided to the user for each of the provided functionality. The number of functionalities and level of control available in different access modes is a subset of automatically customized user interface and/ or functionalities.

In an embodiment, the system includes an instruction unit at the remote control adapted to generate an instruction signal. The instruction unit may be part of the default and/ or customized user interface 535 where user can manually enter a command, thereby generating the instruction signal. The remote control further includes a transmitting unit 510 that is adapted to transmit the instruction signal to the hearing instrument. The receiving unit 40 at the hearing instrument 10 is adapted to receive the transmitted instruction signal; and the speaker 18 of the hearing aid 10 is adapted to deliver a sound sequence comprising the metadata based on the received instruction signal.

Different interacting elements of the remote control are illustrated to be communicatively connected using an information bus 565.

In one embodiment, the software application comprises a recording unit (not shown) that is configured to record a plurality of actions performed by the user on an already customized software application over a predefined time period. Additionally and alternatively, the recording may be performed on default (not yet customized) user interface so that customization of the user interface is based only on usage pattern of the user rather than metadata driven customization. In both these embodiments, as a response to the recording, the software application is configured to automatically create additional access modes. This is typically based on mapping the recorded plurality of actions and determining frequency of an action from the plurality of actions, i.e. which functionality is being used more by the user within the predefined time period. The software application is further configured to place actionable items such as an icon on a display of the remote control based on frequency of use of the functionality associated with the actionable item. The user may choose to use the additional access modes or the ones that are already made available from hearing instrument based customization of the software application. This allows for offering a more user specific rather, in addition to the hearing instrument specific customization, of the software application.

In an embodiment, instead of delivering a single sound sequence comprising the metadata having the information, the hearing instrument outputs a plurality of sound snippets. Each snippet of the plurality of the sound snippets comprises a snippet metadata. Each snippet metadata includes snippet information that includes information about just one or a group of feature(s) and setting(s) of the hearing instrument, the snippet information being a subset of the information that is included in the metadata of the single sound sequence. In various embodiments, different implementation schemes may be used for allowing the hearing instrument to deliver the plurality of sound snippets. For example, the snippets may include a series of continuous beeps with each beep including a snippet metadata, when the hearing instrument is in proximity to the remote control or the hearing instrument establishes communication connection with the remote control. In a preferable example; the remote control sends a query signal, over a wired or wireless connection, to the hearing instrument and enquires about the style of hearing instrument. As a response, the hearing instrument plays a first snippet containing a first snippet metadata information about the hearing instrument style such as a hearing aid style. After the snippet metadata containing the hearing instrument style has been correctly received at the remote control, the remote control enquires for e.g. the available programs at the hearing instrument, which then transmits the second snippet containing a second snippet metadata having snippet information about the available programs. Similarly, the remote control may enquire about other features and settings of the hearing instrument in a sequential manner, based on which the hearing instrument delivers relevant sound snippet containing relevant snippet metadata having snippet information related to the enquiry. Because the remote control knows what has been enquired in each query, the interpretation of the metadata at the remote control is made more efficient because the mapping is simpler, i.e. only between the enquiry made by the remote control and the snippet metadata information received by the remote control.

The above included embodiment may thus be summarized as a method for automatically customizing a software application adapted to control a hearing instrument. The method includes delivering a sound snippet comprising a snippet metadata using a speaker of the hearing instrument; receiving, at a remote control, the sound snippet and interpreting the snippet metadata; outputting a subsequent sound snippet comprising a subsequent snippet metadata using the speaker of the hearing instrument; receiving, at the remote control, the subsequent sound snippet and interpreting the subsequent snippet metadata, and customizing a part(s) of the software application available at the remote control in accordance with the interpreted snippet metadata and subsequent metadata such that the software application is adapted to the hearing instrument, whereby the snippet information contained in the snippet metadata and the subsequent snippet information contained in the subsequent metadata individually include only one information about the hearing instrument. The snippet information and the subsequence snippet information being different from each other. The "part" of the software application refer to that section of the software application to which the information contained in the snippet metadata and subsequent snippet metadata relate. Additionally or alternatively, the output of the sound snippet and/ or subsequent sound snippet is based on an enquiry from the remote control. The output snippet is in response of the enquiry and the snippet metadata and the snippet information contained in the snippet metadata is in response to the enquiry, allowing efficient interpretation of the snippet metadata. Also, if one of the sound snippet cannot be understood, only that particular snippet has to be re-transmitted by the hearing instrument.

In yet another embodiment, instead of a single sound sequence comprising a metadata including the information or a plurality of snippets having each snippet comprising a snippet metadata including snippet information; same sound clip having an adaptive associative capability with different clip metadata based on the remote control query may be used. In other words, a method for automatically customizing a software application adapted to control a hearing instrument. The method includes receiving, at the hearing instrument, a first query from a remote control; linking, at the hearing instrument, a clip metadata to a sound clip in accordance with the query; outputting the sound clip comprising the clip metadata using a speaker of the hearing instrument; receiving, at the remote control, the sound clip and interpreting the clip metadata; and customizing the software application available at the remote control in accordance with the interpreted clip metadata such that a part of the software application is adapted to the hearing instrument. The clip information contained in the clip metadata include information about just one or a group of feature(s) and setting(s) of the hearing instrument, the information being a subset of the information that is included in the metadata of the single sound sequence. The "part" of the software application refer to that section of the software application to which the information contained in the clip metadata relate. In this embodiment, the hearing instrument includes query tool whereby based on receiving the query, the query tool is adapted to search a metadata database usually made available in the hearing instrument and links the metadata result of the search with the sound clip. One example of such search includes a tag search with each clip metadata being individually and distinctly tagged with search keywords extracted from the query, thus facilitating search. Other known search techniques can also be implemented. Therefore, the same sound clip with query-based dynamically associated metadata comprising clip information corresponding to the query is used. Furthermore, because the remote control knows what has been enquired in each query, the interpretation of the metadata at the remote control is made more efficient because the mapping is simpler, i.e. only between the enquiry made by the remote control and the clip metadata information received by the remote control. Also, if one of the sound clips cannot be understood, the same clip but with different clip metadata corresponding to the query not answered has to be re-transmitted by the hearing instrument.

The skilled person would appreciate that the query based approaches, as disclosed in various embodiments, is effective in extracting other information from the hearing instrument. This may include logged data of user's behavior and use of hearing instrument. The extracted information may then be used to further customize the software application at the remote control, and make the customization even more personal to the needs of the user.

In an embodiment, prior to the interpretation of the received metadata and customization of the software application, a decoder at the remote control is configured to interpret the received metadata and a configurator at the remote control is configured to customize the software application by executing machine executable instructions at the remote control.

Fig. 6 illustrates a method for customizing the software application at the remote control according to an embodiment of the disclosure. The software application includes a mobile application (app) and the remote control includes a smartphone. In accordance with the implementation described above, Fig. 6A shows a hearing aid 10 comprising a speaker 605 with a smartphone 500 being used as a remote control. Fig. 6B illustrates that sound sequence comprising the metadata is played using the speaker 605 and the played sound sequence is received by the smartphone 500. Fig. 6C illustrates that once the received metadata is interpreted and used to customize the mobile application at the smartphone, then conceptually one can imagine that the control of the hearing aid is a function of the customization defining metadata of the sound sequence (as represented by the circle where sound sequence is figuratively equaled to the hearing aid).

In an embodiment, the decoder at the remote control is configured to interpret the received metadata and a configurator at the remote control is configured to customize the software application by executing machine executable instructions at the remote control.

The system included in the disclosure includes means/ units that are adapted to perform the steps of the disclosed method.

According to yet another embodiment, a hearing instrument is disclosed. The hearing instrument includes a hearing instrument microphone adapted to capture a sound, a processor adapted to process a microphone signal based on the captured sound and a speaker adapted to output the processed microphone signal. The processor is configured to instruct the speaker to deliver a sound sequence comprising a metadata, the metadata being configured to be interpreted at a remote control and the interpreted metadata being configured to customize a software application, adapted to control the hearing instrument, available at the remote control such that the software application is adapted to the hearing instrument.

In an embodiment, adapting the hearing instrument comprises adjusting a user interface and/ or functionalities of the software application in accordance with the interpreted metadata such that the user interface and/ or the functionalities of the software application are adapted to features and/ or settings of the hearing instrument.

In an embodiment, the sound sequence is delivered when the hearing instrument is not in use; and the hearing instrument is a hearing aid device, which is worn by the user during use.

In an embodiment, the hearing instrument includes a receiving unit configured to receive a transmitted instruction signal from the remote control; and the speaker of the hearing instrument is configured to output the sound sequence based on the received instruction signal. Additionally or alternatively, the hearing instrument includes a hearing instrument detector adapted to detect presence of the remote control and the speaker is adapted to deliver the sound sequence when the hearing instrument detects presence of the remote control, the hearing instrument not being in use.

The hearing instrument included in the disclosure includes means/ units that are adapted to perform the steps applicable to the hearing instrument, sound sequence and the metadata, as would be apparent to the skilled person from the disclosure.

According to yet another embodiment, a machine readable medium comprising executable instructions is disclosed. The instructions, which when executed by a remote control, causes the remote control to interpret a received metadata, the metadata being comprised in a sound sequence being received at a microphone of the remote control and the sound sequence being delivered by a speaker at a hearing instrument; and to customize a software application available at the remote control in accordance with the interpreted metadata such that the software application is adapted to the hearing instrument. The software application is configured to control the hearing instrument.

The "machine" readable file may refer to a "computer" or smartphone or other electronic device readable and executable file.

The software application may include a mobile application and the machine readable medium comprises a file configured to be installed at the remote control and linked to or part of the software application. The "linked to" is defined to include a scenario where the software application is updated with a software patch. The "part of" is defined to include a scenario where the software application itself includes the machine readable executable instructions that allow for adapting the software application to the feature and/ or settings of the hearing instrument. Such instructions may be provided as a downloadable files over a wired or wireless network such as an installable application or files stored in a memory space such as a hard disk, micro SD card, etc.

The execution of the instructions at the remote control adapts the decoder at the remote control to interpret the received metadata and the configurator at the remote control to customize the software application.

The machine readable medium included in the disclosure includes instructions, which when executed by the remote control adapts the remote control to perform the steps of the disclosed method.

It should be appreciated that reference throughout this specification to "one embodiment" or "an embodiment" or features included as "may" means that a particular feature, structure or characteristic described in connection with the embodiment is included in at least one embodiment of the disclosure. Therefore, it is emphasized and should be appreciated that two or more references to "an embodiment" or "one embodiment" or "an alternative embodiment" or features included as "may" in various portions of this specification are not necessarily all referring to the same embodiment. Furthermore, the particular features, structures or characteristics may be combined as suitable in one or more embodiments of the disclosure.

Throughout the foregoing description, for the purposes of explanation, numerous specific details were set forth in order to provide a thorough understanding of the disclosure. It will be apparent, however, to one skilled in the art that the disclosure may be practised without some of these specific details.

Accordingly, the scope of the invention should be judged in terms of the claims which follow.

## Claims

1. A method for automatically customizing a software application at a remote control adapted to control a hearing instrument; the method comprising
receiving, at the remote control, a sound sequence and interpreting a metadata comprised in the sound sequence, the sound sequence being delivered by a speaker of a hearing instrument; and
customizing the software application available at the remote control in accordance with the interpreted metadata such that the software application is adapted to the hearing instrument.

2. The method according to claim 1, wherein
prior to the outputting the sound sequence, receiving at the hearing instrument an instruction signal transmitted by the remote control; and
delivering the sound sequence in response to the received instruction signal.

3. The method according to any of the preceding claims, wherein the customizing comprises adjusting a user interface and/ or functionalities of the software application in accordance with the interpreted metadata such that the user interface and/ or the functionalities of the software application are adapted to features and/ or settings of the hearing instrument.

4. The method according to any of the preceding claims, wherein the metadata comprises information relating to the features and/ or settings of the hearing instrument, and the sound sequence being stored in a memory of the hearing instrument.

5. The method according to any of the preceding claims, further comprising
delivering the sound sequence using the speaker of the hearing instrument when a communication connection is established between the hearing instrument and the remote control, the hearing instrument not being in use; and/ or
delivering the sound sequence using the speaker of the hearing instrument when the hearing instrument detects presence of the remote control, the hearing instrument not being in use; and/ or
delivering the sound sequence using the speaker of the hearing instrument when the remote control detects presence of the hearing instrument, the hearing instrument not being in use; and/ or
delivering the sound sequence using the speaker of the hearing instrument by manually activating the hearing instrument to output the sound sequence, the hearing instrument not being in use.

6. The method according to any of the preceding claims, wherein the metadata comprises an identifier tag for the hearing instrument, and the software application is adapted to store identifier tags for a plurality of hearing instruments, the plurality of hearing instruments comprising same or similar or different features.

7. The method according to any of the preceding claims, further comprising
storing the features and/ or settings of the hearing instrument in a storage unit of the remote control; and
during a subsequent automatic customization, updating the features and/ or settings of the hearing instrument in the storage unit, if the hearing instrument is updated with a new feature and/ or settings.

8. The method according to any of the preceding claims, further comprising updating the software application with additional functionalities; and automatically customizing the updated software application adapted to the hearing instrument based on a mapping of the updated software application with the stored features/ updated features and/ or settings of the hearing instrument.

9. The method according to any of the preceding claims, wherein the customized functionalities are presented to a user in a plurality of access modes;
the access modes being different in number of functionalities provided to the user, and level of control provided to the user for each of the provided functionality; and
the number of functionalities, and level of control being a subset of automatically customized user interface and/ or functionalities.

10. The method according to any of the preceding claims, wherein
the sound sequence comprises a plurality of snippets, where each snippet of the plurality of the sound snippets comprises a snippet metadata comprising a snippet information that includes information about just one or a group of feature(s) and setting(s) of the hearing instrument, the snippet information being a subset of the information that is included in the metadata of the single sound sequence; and/ or
the sound sequence comprises a sound clip that is adapted to adaptively associate with different clip metadata comprising clip information based on a query from the remote control, the clip information including information about just one or a group of feature(s) and setting(s) of the hearing instrument where the clip information is a subset of the information that is included in the metadata of the single sound sequence.

11. A hearing instrument comprising
a hearing instrument microphone adapted to capture a sound, a processor adapted to process a microphone signal based on the captured sound and a speaker adapted to output the processed microphone signal, wherein
the processor is configured to instruct the speaker to deliver a sound sequence comprising a metadata, the metadata being configured to be interpreted at a remote control and the interpreted metadata being configured to customize a software application, adapted to control the hearing instrument, available at the remote control such that the software application is adapted to the hearing instrument.

12. The hearing instrument according to any of the claims 11, wherein
the sound sequence is delivered when the hearing instrument is not in use; and
the hearing instrument is a hearing aid device, which is worn by the user during use.

13. The hearing instrument according to any of the claims 11-12, further comprising
a receiving unit configured to receive a transmitted instruction signal from the remote control; and the speaker of the hearing instrument is configured to output the sound sequence based on the received instruction signal; and/ or
a hearing instrument detector adapted to detect presence of the remote control and the speaker is adapted to deliver the sound sequence when the hearing instrument detects presence of the remote control, the hearing instrument not being in use.

14. A machine readable medium that provides instructions, which when executed by a remote control, cause the remote control to
interpret a received metadata, the metadata being comprised in a sound sequence being received at a microphone of the remote control and the sound sequence being delivered by a speaker at a hearing instrument; and
to customize a software application available at the remote control in accordance with the interpreted metadata such that the software application is adapted to the hearing instrument.

15. The machine readable medium according to claim 15, wherein executing the instructions at the remote control adapts a decoder at the remote control to interpret the received metadata and a configurator at the remote control to customize the software application.
